# EUROPÄISCHE PATENTSCHRIFT

(11) **EP 1 218 653 B1**
(45) Veröffentlichungstag und Bekanntmachung des Hinweises auf die Patenterteilung: **03.09.2003**
(21) Anmeldenummer: 00966097.8
(22) Anmeldetag: 30.09.2000
(51) Int. Cl.: F16H 61/00, F16J 15/12

(54) **DICHTUNG FÜR ZWISCHENBLECH EINES VENTILGEHÄUSES FÜR AUTOMATIKGETRIEBE**
SEAL FOR INTERMEDIATE SHEET STEEL OF A VALVE HOUSING FOR AN AUTOMATIC TRANSMISSION
GARNITURE D'ETANCHEITE POUR TOLE INTERMEDIAIRE DE CORPS DE SOUPAPE DE TRANSMISSION AUTOMATIQUE

(30) Priorität: 06.10.1999 DE 19947948
(43) Veröffentlichungstag der Anmeldung: 03.07.2002
(73) Patentinhaber: ZF FRIEDRICHSHAFEN Aktiengesellschaft, 88038 Friedrichshafen (DE)
(72) Erfinder: GIERER, Georg, 88079 Kressbronn (DE); KIEBLER, Herbert, 88069 Tettnang (DE); FRIEDRICH, Hubert, 88048 Friedrichshafen (DE)
(86) Internationale Anmeldenummer: EP0009619
(87) Internationale Veröffentlichungsnummer: WO01025655

(56) Entgegenhaltungen:
- EP-A- 0 733 833
- US-A- 3 679 218
- US-A- 4 880 669

## Beschreibung

Die vorliegende Erfindung betrifft ein Hydrauliksteuergerät zur Aufnahme elektromagnetischer Stellglieder und hydraulischer Ventile, das in einem Automatgetriebe für ein Kraftfahrzeug eingesetzt ist und das ein Ventilgehäuse, ein Steuerblech, mindestens eine Dichtung und eine Kanalplatte aufweist.

Ein derartiges Hydrauliksteuergerät wird sowohl für stufenlose Automatgetriebe (CVT) als auch für Stufenautomatgetriebe verwendet. Elektrohydraulische Stufenautomatgetriebe weisen üblicherweise eine Anfahreinheit, z. B. in Form eines hydrodynamischen Wandlers, Kupplungen und Bremsen, das Hydrauliksteuergerät und ein elektronisches Getriebesteuergerät auf. Das elektronische Getriebesteuergerät bildet aus Eingangsgrößen die für die Steuerung des Automatgetriebes erforderlichen Parameter. Eingangsgrößen sind dabei die von Sensoren bereitgestellten Signale sowie von anderen elektronischen Steuergeräten, z. B. dem Motorsteuergerät, zur Verfügung gestellten Signale. Das elektronische Getriebesteuergerät steuert über Ausgangssignale die elektromagnetischen Stellglieder, die im Hydrauliksteuergerät enthalten sind. Über die elektromagnetischen Stellglieder werden Schaltungen initiiert, indem eine entsprechende Kupplungs-/Brems-Kombination ausgewählt wird. Zusätzlich wird über die elektromagnetischen Stellglieder der Druckverlauf über die hydraulischen Ventile während der Schaltung sowie das Druckniveau außerhalb der Schaltung gesteuert.

Aus der DE A 40 41 253 ist ein Automatgetriebe bekannt, bei dem das Hydrauliksteuergerät auf der Unterseite angeordnet ist. Das Hydrauliksteuergerät besteht aus einem Ansaugschnorchel, einem Ventilgehäuse, einem Steuerblech mit Dichtung und einer Kanalplatte. Hierbei kommen die Kanalplatte und das Getriebegehäuse über zwei Flächen zueinander in Anlage, wobei diese Flächen als Dichtflächen ausgeführt sind. Zur Abdichtung des Hydrauliksteuergerätes gegen das Getriebegehäuse sind Dichtungen erforderlich, da aufgrund des Setzverhaltens und der Änderung der Vorspannkraft der Verbindungsschrauben an dieser Stelle sonst Undichtigkeiten auftreten können. Auch das zwischen dem Ventilgehäuse und der Kanalplatte vorhandene Steuerblech muß mit einer Dichtung versehen sein.

Als Dichtungen für derartige Hydrauliksteuergeräte werden üblicherweise Materialien aus Weichstoff verwendet, die auf Stahlplatten als Träger angeordnet sind. Die Dichtungen werden durch unterschiedliche Wärmedehnungen von Steuerblech und Ventilgehäuse belastet; bei den bekannten Dichtungen konnte aufgrund der Setzbeträge nur eine einseitige Abdichtung erzielt werden. Es war daher erforderlich, für eine bessere Abdichtung kürzere Schraubenabstände zu wählen, wodurch jedoch der Bauaufwand erhöht wird.

Auch eine Erhöhung der Vorspannkräfte in den Dichtfugen durch Anordnung von Sicken ist durch die aufwendige Geometrie der erforderlichen Dichtungen nicht möglich. Das gleiche gilt auch für eine Verbesserung der Abdichtung mit Hilfe von Silikonraupen.

Ein Hydrauliksteuergerät gemäß dem Oberbegriff des Anspruchs 1 ist aus der EP 733 833 A bekannt. Dieses gerät weist eine Dichtung auf, die aus einem mit gummi beschichteten Metallträger besteht.

Aufgabe der vorliegenden Erfindung ist es, ein Hydrauliksteuergerät zu schaffen, das eine hervorragende Abdichtung insbesondere an den Steuerblechen im Hydrauliksteuergerät sowie an den Dichtflächen zwischen Hydrauliksteuergerät und Getriebegehäuse gewährleistet.

Ausgehend von einem Hydrauliksteuergerät der eingangs näher genannten Art erfolgt die Lösung dieser Aufgabe mit den im Anspruchs 1 angegebenen Merkmalen; vorteilhafte Ausgestaltungen sind in den Unteransprüchen beschrieben.

Erfindungsgemäß wird also vorgeschlagen, dass die Dichtung aus einem Aluminiumträger mit einer Dicke von 1 bis 2 mm besteht, der auf mindestens einer Seite mit einem Material beschichtet ist, das eine Schichtdicke im Bereich von 60 bis 180 µm aufweist, dessen Härte im Bereich von 20 bis 120 Shore A liegt und das auf seiner freien Oberfläche mit einer Profilierung versehen ist, deren Profiltiefe im Bereich von 20 bis 50 µm liegt. In einer Ausgestaltung der Erfindung wird vorgeschlagen, die Profiltiefe der Oberfläche von 20 bis 50 µm durch ein Versäumungsverfahren herzustellen.

Mit der erfindungsgemäß ausgestalteten Dichtung wird eine hervorragende Abdichtung sowohl an den Steuerblechen im Hydrauliksteuergerät als auch an den Dichtflächen zwischen Hydrauliksteuergerät und Getriebegehäuse erzielt. Durch die Profilierung der Oberfläche kann mit geringeren Preßkräften als bisher üblich diese Dichtwirkung erzielt werden. Durch die Wahl der Dicke der Beschichtung, der Pro filierung der Beschichtung und durch die Wahl der Härte des Materials, das ein Elastomer ist, kann die Dichtwirkung exakt an die Oberflächen der Gegendichtflächen angepaßt werden.

Durch die Auswahl des Trägermaterials in Form von Aluminium ist die Dichtung sowohl an das Steuerblech als auch an die Wärmeausdehnung der Dichtflächen des Getriebegehäuses angepaßt. Durch geringere Setzbeträge können beide Seiten des Trägers beschichtet werden; der Montageaufwand wird durch vorab komplettierte Dichtungen verringert; unterschiedliche Wärmedehnungen haben keine schädliche Auswirkung auf die Dichtung.

Im folgenden wird die Erfindung anhand der Zeichnung näher erläutert, in der ein vorteilhaftes Ausführungsbeispiel dargestellt ist. Es zeigen
Figur 1a eine Draufsicht auf die profilierte Oberfläche einer Dichtung in sechsfacher Vergrößerung und

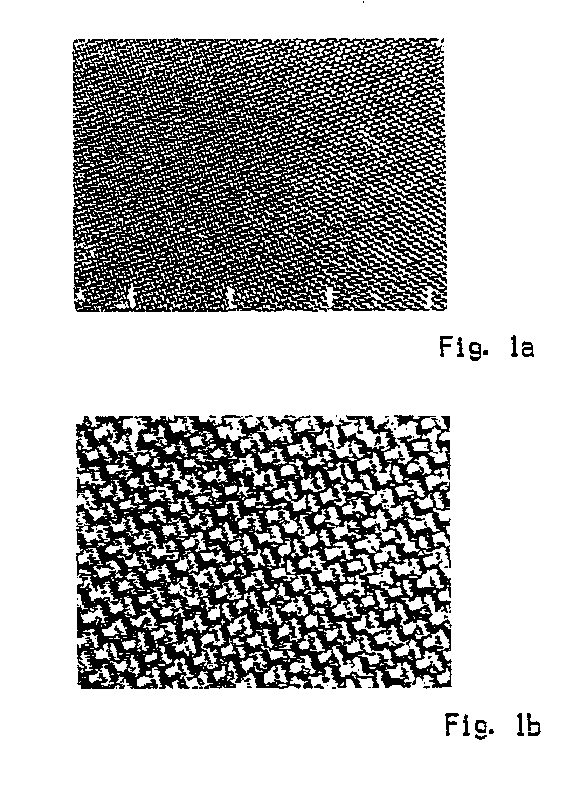

Figur 1b diese Draufsicht in fünfundzwanzigfacher Vergrößerung.

Als Trägermaterial für die Dichtung wird vorteilhafterweise Aluminium verwendet, das eine Dicke im Bereich von 1 bis 2 mm und vorzugsweise 1,5 mm aufweist. Mindestens eine Seite, vorzugsweise beide Seiten, dieses Aluminiumträgers wird nun mit einem Material, vorzugsweise einem Elastomer aus gebundenen faserverstärkten Stoffen, beschichtet, das z. B. aus NBR (nitrile butadiene rubber) besteht, dessen Schichtdicke im Bereich von 100 bis 180 µm und vorzugsweise 140 um beträgt. Die Härte dieses Elastomers liegt im Bereich von 20 bis 120 Shore A und vorzugsweise bei 70 Shore A.

Die freie Oberfläche dieses Materials ist nun mit einer Profilierung versehen, beispielsweise in Art eines Gewebes, wie es in den Figuren 1 und 2 dargestellt ist. Diese Profilierung weist eine Profiltiefe im Bereich von 20 bis 50 µm auf und vorzugsweise von 35 µm bis 40 µm. Der Traganteil tpi erreicht dadurch in einer Tiefe von 15 µm bis 20 µm etwa 50 %.

Durch diese Profilierung der Oberfläche kann mit geringeren Preßkräften als bisher üblich eine hervorragende Dichtwirkung erzielt werden. Durch Wahl der Dicke der Beschichtung, der Profilierung und der Härte des Elastomers ist die Dichte an unterschiedliche Oberflächen der Gegendichtflächen anpaßbar.

Anstelle von Aluminium kann auch ein anderes Leichtmetall als Träger verwendet werden. Dies ist aber kein Teil der Erfindung.

## Patentansprüche

1. Hydrauliksteuergerät zur Aufnahme elektromagnetischer Stellglieder und hydraulischer Ventile, das in einem Automatgetriebe für ein Kraftfahrzeug eingesetzt ist und das ein Ventilgehäuse, ein Steuerblech, mindestens eine Dichtung und eine Kanalplatte aufweist, wobei die Dichtung aus einem Leichtmetallträger mit einer Dicke im Bereich von 1 bis 2 mm besteht, der auf mindestens einer Seite mit einem Material beschichtet ist, das eine Schichtdicke im Bereich von 60 bis 180 µm aufweist, dessen Härte im Bereich von 20 bis 120 Shore A liegt, **dadurch gekennzeichnet, dass** der Metallträger ein Aluminiumträger ist, und daß das Beschichtungsmaterial auf seiner freien Oberfläche mit einer Profilierung versehen ist, deren Profiltiefe im Bereich von 20 bis 50 um liegt.

2. Hydrauliksteuergerät nach Anspruch 1, **dadurch gekennzeichnet, dass** der Aluminiumträger eine Dicke von 1,5 mm aufweist.

3. Hydrauliksteuergerät nach Ansprüchen 1 und 2, **dadurch gekennzeichnet, dass** die Schichtdicke des Materials auf dem Aluminiumträger 140 µm beträgt.

4. Hydrauliksteuergerät nach Ansprüchen 1 bis 3, **dadurch gekennzeichnet, dass** die Härte des auf dem Aluminiumträger angeordneten Materials 70 Shore A beträgt.

5. Hydrauliksteuergerät nach Ansprüchen 1 bis 4, **dadurch gekennzeichnet, dass** die Profiltiefe des auf dem Aluminiumträger des angeordneten Materials 35 µm bis 40 µm beträgt.

6. Hydrauliksteuergerät nach einem oder mehreren der vorhergehenden Ansprüche, **dadurch gekennzeichnet, dass** das auf dem Aluminiumträger angeordnete Material ein Elastomer ist.

7. Hydrauliksteuergerät nach einen oder mehreren der vorherigen Ansprüche, **dadurch gekennzeichnet, dass** das auf dem Aluminiumträger angeordnete Material geschäumt ist.

8. Hydrauliksteuergerät nach einem oder mehreren der vorherigen Ansprüche, **dadurch gekennzeichnet, dass** das auf dem Auluminium angeordnete Material mittels Siebdrucktechnik auf das Aluminium aufgebracht ist.

## Claims

1. Hydraulic control unit housing electromagnetic actuators and hydraulic valves and used in an automatic transmission for a motor vehicle, and which is provided with a valve housing, a control plate, at least one gasket and a duct plate, with the gasket consisting of a metal carrier between 1 and 2 mm thick and being coated on one side at least with a material between 60 and 180 µm thick and of a hardness between 20 and 120 Shore A, **characterized in that** the metal carrier is an AL carrier and the coating material on its free surface is provided with profiles between 20 and 50 µm deep.

2. Hydraulic control unit according to claim 1, **characterized in that** the AL carrier has a thickness of 1.5 mm.

3. Hydraulic control unit according to claims 1 and 2, **characterized in that** the thickness of the coating material on the AL carrier is 140 µm.

4. Hydraulic control unit according to claims 1 to 3, **characterized in that** the hardness of the material provided on the AL carrier is 70 Shore A.

5. Hydraulic control unit according to claims 1 to 4, **characterized in that** the profile depth of the material provided on the AL carrier is between 35 and 40 µm.

6. Hydraulic control unit according to one or several of the preceding claims, **characterized in that** the material provided on the AL carrier is an elastomer.

7. Hydraulic control unit according to one or several of the preceding claims, **characterized in that** the material provided on the AL carrier is foamed.

8. Hydraulic control unit according to one or several of the preceding claims, **characterized in that** the material provided on the AL carrier was applied by means of screen printing.

## Revendications

1. Appareil de commande hydraulique destiné à recevoir des actionneurs électromagnétiques et des vannes hydrauliques, qui est utilisé dans une transmission automatique pour un véhicule automobile, et qui comporte un boîtier de vannes, une plaque de commande, au moins un joint d'étanchéité et une plaque à canaux, dans lequel le joint d'étanchéité est constitué par un support métallique d'une épaisseur comprise dans l'intervalle de 1 à 2 mm, qui est revêtu, sur au moins une face, d'une matière qui comporte une épaisseur de couché comprise dans l'intervalle de 60 à 180 µm, dont la dureté se trouve dans l'intervalle de 20 à 120 Shore A, **caractérisé en ce que** le support métallique est un support en aluminium, et **en ce que** la matière de revêtement est pourvue, sur sa surface libre, d'un profil dont la profondeur se situe dans l'intervalle de 20 à 50 µm.

2. Appareil de commande hydraulique selon la revendication 1, **caractérisé en ce que** le support en aluminium a une épaisseur de 1, 5mm.

3. Appareil de commande hydraulique selon les revendications 1 et 2, **caractérisé en ce que** l'épaisseur de couche de la matière prévue sur le support d'aluminium est de 140 µm.

4. Appareil de commande hydraulique selon les revendications 1 à 3, **caractérisé en ce que** la dureté de la matière disposée sur le support en aluminium est de 70 Shore A.

5. Appareil de commande hydraulique selon les revendications 1 à 4, **caractérisé en ce que** la profondeur du profil de la matière disposée sur le support en aluminium est de 35 µm à 40 µm.

6. Appareil de commande hydraulique selon l'une ou plusieurs des revendications précédentes, **caractérisé en ce que** la matière disposée sur le support en aluminium est un élastomère.

7. Appareil de commande hydraulique selon l'une ou plusieurs des revendications précédentes, **caractérisé en ce que** la matière disposée sur le support en aluminium est transformée en mousse.

8. Appareil de commande hydraulique selon l'une ou plusieurs des revendications précédentes, **caractérisé en ce que** la matière disposée sur l'aluminium est appliquée sur l'aluminium par la technique de sérigraphie.
